# EUROPEAN PATENT APPLICATION

(11) **EP 4 451 252 A1**
(43) Date of publication of application: **23.10.2024**
(21) Application number: 24165572.9
(22) Date of filing: 22.03.2024
(51) Int. Cl.: G09G 3/20, G02B 27/01, H04N 5/14, H04N 9/73, H04N 23/88

(54) **ELECTRONIC DEVICE WITH MOTION BASED COLOR CORRECTION**

(30) Priority: 20.04.2023 US 202363497386 P; 21.02.2024 US 202418583722
(71) Applicant: Apple Inc., Cupertino, CA 95014 (US)
(72) Inventor: CAO, Rembo, Cupertino, CA 95014 (US); ZHAO, Yonghui, Cupertino, CA 95014 (US); MOORE, Christian I, Cupertino, CA 95014 (US)
(74) Representative: Lang, Johannes

(57) **Abstract**

A head-mounted device is provided that includes one or more image sensors configured to capture a video feed, one or more motion sensors configured to detect motion, and control circuitry configured to analyze a lighting condition of the captured video feed and to perform auto white balancing operations on the captured video feed. An update frequency or a color adaptation speed of the auto white balancing operations can be determined based on the lighting condition and the detected motion. The color adaptation speed of the auto white balancing operations can be adjusted only in response to detecting, using the one or more motion sensors, an amount of motion exceeding a threshold.

## Description

This application claims priority to U.S. patent application No. 18/583,722, filed February 21, 2024, which claims the benefit of U.S. Provisional Patent Application No. 63/497,386, filed April 20, 2023, which are hereby incorporated by reference herein in their entireties.

### Field

This relates generally to electronic devices, and, more particularly, to electronic devices such as head-mounted devices.

### Background

Electronic devices such as head-mounted devices may have cameras for capturing a video feed of an external environment and one or more displays for presenting the captured video feed to a user. Head-mounted devices can include hardware or software subsystems for processing the video feed, such as hardware/software subsystems for performing color correction on the captured video feed.

It can be challenging to design a head-mounted device in which the user is presented with such passthrough video feed. For example, the user can point the device towards a first part of a scene having a first set of light sources and can subsequently shift to pointing the device towards a second part of the scene having a second set of light sources that is different than the first set of light sources. Performing color correction at a fixed frame rate might be too slow when the light source of the scene is changing, which can result in incorrect color rendering. In other scenarios, performing color correction at a fixed frame rate might be too fast and can cause unwanted color rendering swings.

### Summary

An electronic device such as a head-mounted device may include one or more cameras for capturing a video feed of a real-world environment and one or more displays for presenting a passthrough video feed to a user. The electronic device may include processing circuitry for performing one or more processing functions on the captured video feed to generate the passthrough video feed. The processing circuitry may be configured to perform color correction on the captured video feed based on image information, flicker information, lighting information, and motion information.

An aspect of the disclosure provides a method of operating an electronic device that includes acquiring a video feed using at least one image sensor, detecting a motion of the electronic device using the at least one motion sensor, and performing color correction on the video feed based on the detected motion of the electronic device to generate a corresponding color corrected video feed. The method can further include adjusting a color adaptation speed of the color correction on the video feed in response to detecting a first amount of motion of the electronic device, adjusting the color adaptation speed of the color correction on the video feed in response to detecting a second amount of motion of the electronic device different than the first amount of motion, and keeping constant the color adaptation speed of the color correction on the video feed in response to detecting a third amount of motion of the electronic device different than the first and second amounts of motion. The color adaptation speed of the color correction can also be adjusted based on a lighting condition in the video feed or based on a mixed lighting score. The color correction can be based on data obtained from a flicker detection sensor. The data obtained from a flicker detection sensor can include frequency information about lighting in the video feed and can include multiple channel outputs.

An aspect of the disclosure provides a method of operating an electronic device that includes capturing a video feed using one or more image sensors, detecting motion using one or more motion sensors, analyzing a lighting condition of the video feed, and performing color correction on the video feed based on the lighting condition in the video feed. The color adaptation speed of the color correction on the video feed can be adjusted in response to detecting motion using the one or more motion sensors. The method can include increasing the color adaptation speed in response to determining that the lighting condition has changed. The method can include maintaining or decreasing the color adaptation speed in response to determining that the lighting condition is stable. The method can include increasing the color adaptation speed in response to determining that the video feed includes a first number of illuminants. The method can include maintaining or decreasing the color adaptation speed in response to determining that the video feed includes a second number of illuminants less than the first number of illuminants. The method can include adjusting the color adaptation speed based on a speed of the detected motion.

An aspect of the disclosure provides an electronic device that includes one or more image sensors configured to capture a video feed, one or more motion sensors configured to detect motion, and control circuitry configured to analyze a lighting condition of the captured video feed and configured to perform auto white balancing (AWB) operations on the captured video feed. The update frequency of the AWB operations can be determined based on the lighting condition and the detected motion.

### Brief Description of the Drawings

FIG. 1 is a top view of an illustrative head-mounted device in accordance with some embodiments.
FIG. 2 is a schematic diagram of an illustrative head-mounted device in accordance with some embodiments.
FIG. 3 is a diagram of an illustrative head-mounted device having a color correction subsystem in accordance with some embodiments.
FIG. 4 is a flow chart of illustrative steps for operating the color correction subsystem of FIG. 3 in accordance with some embodiments.
FIG. 5 is a flow chart of illustrative steps for adjusting an auto white balance (AWB) adaptation speed based on motion data in accordance with some embodiments.

### Detailed Description

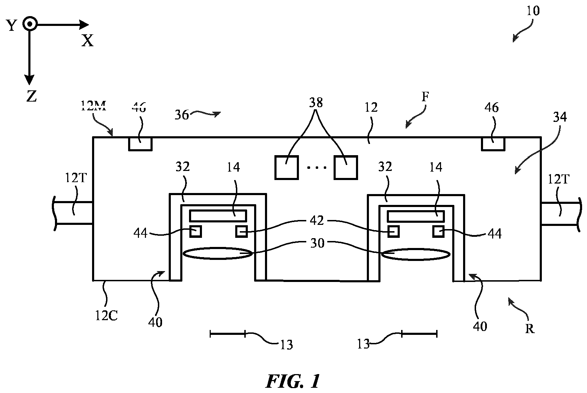

A top view of an illustrative head-mounted device is shown in FIG. 1. As shown in FIG. 1, head-mounted devices such as electronic device 10 may have head-mounted support structures such as housing 12. Housing 12 may include portions (e.g., head-mounted support structures 12T) to allow device 10 to be worn on a user's head. Support structures 12T may be formed from fabric, polymer, metal, and/or other material. Support structures 12T may form a strap or other head-mounted support structures to help support device 10 on a user's head. A main support structure (e.g., a head-mounted housing such as main housing portion 12M) of housing 12 may support electronic components such as displays 14.

Main housing portion 12M may include housing structures formed from metal, polymer, glass, ceramic, and/or other material. For example, housing portion 12M may have housing walls on front face F and housing walls on adjacent top, bottom, left, and right side faces that are formed from rigid polymer or other rigid support structures, and these rigid walls may optionally be covered with electrical components, fabric, leather, or other soft materials, etc. Housing portion 12M may also have internal support structures such as a frame (chassis) and/or structures that perform multiple functions such as controlling airflow and dissipating heat while providing structural support.

The walls of housing portion 12M may enclose internal components 38 in interior region 34 of device 10 and may separate interior region 34 from the environment surrounding device 10 (exterior region 36). Internal components 38 may include integrated circuits, actuators, batteries, sensors, and/or other circuits and structures for device 10. Housing 12 may be configured to be worn on a head of a user and may form glasses, spectacles, a hat, a mask, a helmet, goggles, and/or other head-mounted device. Configurations in which housing 12 forms goggles may sometimes be described herein as an example.

Front face F of housing 12 may face outwardly away from a user's head and face. Opposing rear face R of housing 12 may face the user. Portions of housing 12 (e.g., portions of main housing 12M) on rear face R may form a cover such as cover 12C (sometimes referred to as a curtain). The presence of cover 12C on rear face R may help hide internal housing structures, internal components 38, and other structures in interior region 34 from view by a user.

Device 10 may have one or more cameras such as cameras 46 of FIG. 1. Cameras 46 that are mounted on front face F and that face outwardly (towards the front of device 10 and away from the user) may sometimes be referred to herein as forward-facing or front-facing cameras. Cameras 46 may capture visual odometry information, image information that is processed to locate objects in the user's field of view (e.g., so that virtual content can be registered appropriately relative to real-world objects), image content that is displayed in real time for a user of device 10, and/or other suitable image data. For example, forward-facing (front-facing) cameras may allow device 10 to monitor movement of the device 10 relative to the environment surrounding device 10 (e.g., the cameras may be used in forming a visual odometry system or part of a visual inertial odometry system). Forward-facing cameras may also be used to capture images of the environment that are displayed to a user of the device 10. If desired, images from multiple forward-facing cameras may be merged with each other and/or forward-facing camera content can be merged with computer-generated content for a user.

Device 10 may have any suitable number of cameras 46. For example, device 10 may have K cameras, where the value of K is at least one, at least two, at least four, at least six, at least eight, at least ten, at least 12, less than 20, less than 14, less than 12, less than 10, 4-10, or other suitable value. Cameras 46 may be sensitive at infrared wavelengths (e.g., cameras 46 may be infrared cameras), may be sensitive at visible wavelengths (e.g., cameras 46 may be visible cameras), and/or cameras 46 may be sensitive at other wavelengths. If desired, cameras 46 may be sensitive at both visible and infrared wavelengths.

Device 10 may have left and right optical modules 40. Optical modules 40 support electrical and optical components such as light-emitting components and lenses and may therefore sometimes be referred to as optical assemblies, optical systems, optical component support structures, lens and display support structures, electrical component support structures, or housing structures. Each optical module may include a respective display 14, lens 30, and support structure such as support structure 32. Support structure 32, which may sometimes be referred to as a lens support structure, optical component support structure, optical module support structure, or optical module portion, or lens barrel, may include hollow cylindrical structures with open ends or other supporting structures to house displays 14 and lenses 30. Support structures 32 may, for example, include a left lens barrel that supports a left display 14 and left lens 30 and a right lens barrel that supports a right display 14 and right lens 30.

Displays 14 may include arrays of pixels or other display devices to produce images. Displays 14 may, for example, include organic light-emitting diode pixels formed on substrates with thin-film circuitry and/or formed on semiconductor substrates, pixels formed from crystalline semiconductor dies, liquid crystal display pixels, scanning display devices, and/or other display devices for producing images.

Lenses 30 may include one or more lens elements for providing image light from displays 14 to respective eyes boxes 13. Lenses may be implemented using refractive glass lens elements, using mirror lens structures (catadioptric lenses), using Fresnel lenses, using holographic lenses, and/or other lens systems.

When a user's eyes are located in eye boxes 13, displays (display panels) 14 operate together to form a display for device 10 (e.g., the images provided by respective left and right optical modules 40 may be viewed by the user's eyes in eye boxes 13 so that a stereoscopic image is created for the user). The left image from the left optical module fuses with the right image from a right optical module while the display is viewed by the user.

It may be desirable to monitor the user's eyes while the user's eyes are located in eye boxes 13. For example, it may be desirable to use a camera to capture images of the user's irises (or other portions of the user's eyes) for user authentication. It may also be desirable to monitor the direction of the user's gaze. Gaze tracking information may be used as a form of user input and/or may be used to determine where, within an image, image content resolution should be locally enhanced in a foveated imaging system. To ensure that device 10 can capture satisfactory eye images while a user's eyes are located in eye boxes 13, each optical module 40 may be provided with a camera such as camera 42 and one or more light sources such as light-emitting diodes 44 or other light-emitting devices such as lasers, lamps, etc. Cameras 42 and light-emitting diodes 44 may operate at any suitable wavelengths (visible, infrared, and/or ultraviolet). As an example, diodes 44 may emit infrared light that is invisible (or nearly invisible) to the user. This allows eye monitoring operations to be performed continuously without interfering with the user's ability to view images on displays 14.

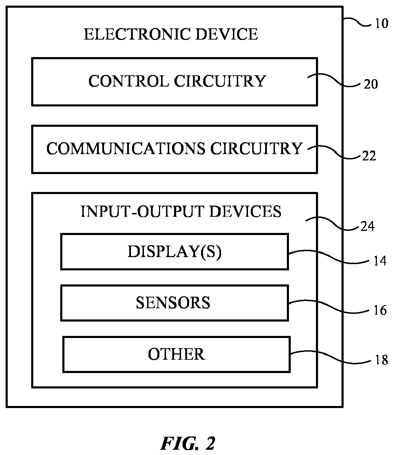

A schematic diagram of an illustrative electronic device such as a head-mounted device or other wearable device is shown in FIG. 2. Device 10 of FIG. 2 may be operated as a stand-alone device and/or the resources of device 10 may be used to communicate with external electronic equipment. As an example, communications circuitry in device 10 may be used to transmit user input information, sensor information, and/or other information to external electronic devices (e.g., wirelessly or via wired connections). Each of these external devices may include components of the type shown by device 10 of FIG. 2.

As shown in FIG. 2, a head-mounted device such as device 10 may include control circuitry 20. Control circuitry 20 may include storage and processing circuitry for supporting the operation of device 10. The storage and processing circuitry may include storage such as nonvolatile memory (e.g., flash memory or other electrically-programmable-read-only memory configured to form a solid state drive), volatile memory (e.g., static or dynamic random-access-memory), etc. One or more processors in control circuitry 20 may be used to gather input from sensors and other input devices and may be used to control output devices. The processing circuitry may be based on one or more processors such as microprocessors, microcontrollers, digital signal processors, baseband processors and other wireless communications circuits, power management units, audio chips, application specific integrated circuits, etc. During operation, control circuitry 20 may use display(s) 14 and other output devices in providing a user with visual output and other output. Control circuitry 20 may be configured to perform operations in device 10 using hardware (e.g., dedicated hardware or circuitry), firmware, and/or software. Software code for performing operations in device 10 may be stored on storage circuitry (e.g., non-transitory (tangible) computer readable storage media that stores the software code). The software code may sometimes be referred to as program instructions, software, data, instructions, or code. The stored software code may be executed by the processing circuitry within circuitry 20.

To support communications between device 10 and external equipment, control circuitry 20 may communicate using communications circuitry 22. Circuitry 22 may include antennas, radio-frequency transceiver circuitry, and other wireless communications circuitry and/or wired communications circuitry. Circuitry 22, which may sometimes be referred to as control circuitry and/or control and communications circuitry, may support bidirectional wireless communications between device 10 and external equipment (e.g., a companion device such as a computer, cellular telephone, or other electronic device, an accessory such as a point device or a controller, computer stylus, or other input device, speakers or other output devices, etc.) over a wireless link.

For example, circuitry 22 may include radio-frequency transceiver circuitry such as wireless local area network transceiver circuitry configured to support communications over a wireless local area network link, near-field communications transceiver circuitry configured to support communications over a near-field communications link, cellular telephone transceiver circuitry configured to support communications over a cellular telephone link, or transceiver circuitry configured to support communications over any other suitable wired or wireless communications link. Wireless communications may, for example, be supported over a Bluetooth^{®} link, a WiFi^{®} link, a wireless link operating at a frequency between 10 GHz and 400 GHz, a 60 GHz link, or other millimeter wave link, a cellular telephone link, or other wireless communications link. Device 10 may, if desired, include power circuits for transmitting and/or receiving wired and/or wireless power and may include batteries or other energy storage devices. For example, device 10 may include a coil and rectifier to receive wireless power that is provided to circuitry in device 10.

Device 10 may include input-output devices such as devices 24. Input-output devices 24 may be used in gathering user input, in gathering information on the environment surrounding the user, and/or in providing a user with output. Devices 24 may include one or more displays such as display(s) 14. Display(s) 14 may include one or more display devices such as organic light-emitting diode display panels (panels with organic light-emitting diode pixels formed on polymer substrates or silicon substrates that contain pixel control circuitry), liquid crystal display panels, microelectromechanical systems displays (e.g., two-dimensional mirror arrays or scanning mirror display devices), display panels having pixel arrays formed from crystalline semiconductor light-emitting diode dies (sometimes referred to as microLEDs), and/or other display devices.

Sensors 16 in input-output devices 24 may include force sensors (e.g., strain gauges, capacitive force sensors, resistive force sensors, etc.), audio sensors such as microphones, touch and/or proximity sensors such as capacitive sensors such as a touch sensor that forms a button, trackpad, or other input device), and other sensors. If desired, sensors 16 may include optical sensors such as optical sensors that emit and detect light, ultrasonic sensors, optical touch sensors, optical proximity sensors, and/or other touch sensors and/or proximity sensors, monochromatic and color ambient light sensors, image sensors (e.g., cameras), fingerprint sensors, iris scanning sensors, retinal scanning sensors, and other biometric sensors, temperature sensors, sensors for measuring three-dimensional non-contact gestures ("air gestures"), pressure sensors, sensors for detecting position, orientation, and/or motion of device 10 and/or information about a pose of a user's head (e.g., accelerometers, magnetic sensors such as compass sensors, gyroscopes, and/or inertial measurement units that contain some or all of these sensors), health sensors such as blood oxygen sensors, heart rate sensors, blood flow sensors, and/or other health sensors, radio-frequency sensors, three-dimensional camera systems such as depth sensors (e.g., structured light sensors and/or depth sensors based on stereo imaging devices that capture three-dimensional images) and/or optical sensors such as self-mixing sensors and light detection and ranging (lidar) sensors that gather time-of-flight measurements (e.g., time-of-flight cameras), humidity sensors, moisture sensors, gaze tracking sensors, electromyography sensors to sense muscle activation, facial sensors, and/or other sensors. In some arrangements, device 10 may use sensors 16 and/or other input-output devices to gather user input. For example, buttons may be used to gather button press input, touch sensors overlapping displays can be used for gathering user touch screen input, touch pads may be used in gathering touch input, microphones may be used for gathering audio input (e.g., voice commands), accelerometers may be used in monitoring when a finger contacts an input surface and may therefore be used to gather finger press input, etc.

If desired, electronic device 10 may include additional components (see, e.g., other devices 18 in input-output devices 24). The additional components may include haptic output devices, actuators for moving movable housing structures, audio output devices such as speakers, light-emitting diodes for status indicators, light sources such as light-emitting diodes that illuminate portions of a housing and/or display structure, other optical output devices, and/or other circuitry for gathering input and/or providing output. Device 10 may also include a battery or other energy storage device, connector ports for supporting wired communication with ancillary equipment and for receiving wired power, and other circuitry.

Display(s) 14 can be used to present a variety of content to a user's eye. The left and right displays 14 that are used to present a fused stereoscopic image to the user's eyes when viewing through eye boxes 13 can sometimes be referred to collectively as a display 14. As an example, virtual reality (VR) content can be presented by display 14. Virtual reality content may refer to content that only includes virtual objects within a virtual reality (computer-generated) environment. As another example, mixed reality (MR) content can be presented by display 14. Mixed reality content may refer to content that includes virtual objects *and* real objects from the real-world physical environment in which device 10 is being operated. As another example, only real-world content can be presented by display 14. The real-world content may refer to images being captured by one or more front-facing cameras (see, e.g., cameras 46 in FIG. 1) and passed through as a live feed to the user. The real-world content being captured by the front-facing cameras is therefore sometimes referred to as a camera passthrough feed, a (live) video passthrough feed, or a passthrough video feed (stream).

A physical environment refers to a physical world that people can sense and/or interact with without the aid of an electronic device. In contrast, an extended reality (XR) environment refers to a wholly or partially simulated environment that people sense and/or interact with via an electronic device. For example, the XR environment may include augmented reality (AR) content, mixed reality (MR) content, virtual reality (VR) content, and/or the like. With an XR system, a subset of a person's physical motions, or representations thereof, are tracked, and, in response, one or more characteristics of one or more virtual objects simulated in the XR environment are adjusted in a manner that comports with at least one law of physics.

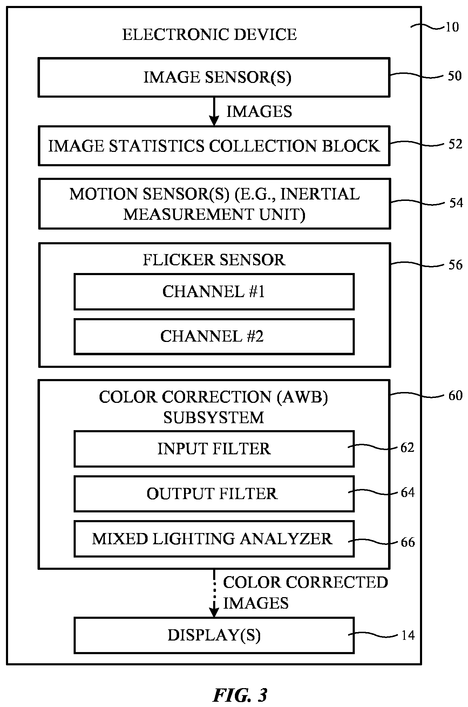

FIG. 3 is a block diagram showing different hardware and/or software components within device 10 for adjusting one or more image settings for image sensor block 50. Block 50 may represent one or more pass-through cameras that are implemented as color image sensors. The color image sensors may include an array of image pixels with an overlapping color filter array (as an example). Color image sensor(s) 50 may be charge-coupled device (CCD) image sensors, complementary metal-oxide-semiconductor (CMOS) image sensors, or other types of digital image sensors. If desired, block 50 can additionally or alternatively include monochrome image sensors for capturing images without any color information. A series of images captured by image sensor(s) 50 can be referred to as a video feed.

In embodiments where block 50 includes one or more color image sensor(s), image sensor(s) 50 may generate a raw color image that can be analyzed using an image statistics collection block such as image statistics analyzer 52. Image statistics analyzer 52 may receive captured images from image sensor(s) 50 and analyze the captured images to obtain information relating to automatic exposure (AE) settings, auto focus (AF) settings, auto white balance (AWB) settings, color statistics (e.g., color histograms), brightness settings, black level compensation settings, an image histogram (e.g., a graphical representation of tonal distribution in a digital image), sharpness maps, flicker detection, object detection, spatial (depth) statistics, thumbnail information, lighting of the environment, image configuration, and/or other statistical information relating to the captured image. The information collected by image statistics analyzer 52 may be referred to collectively as image statistics information.

Device 10 may include one or more motion sensor(s) 54. Motion sensor(s) 54 may be considered part of sensors 16 in FIG. 2. As an example, motion sensor(s) 54 can include visual inertial odometry (VIO) sensors for gathering information used to track an orientation and position of device 10 when worn on a user's head. VIO sensors can include inertial measurement units (e.g., gyroscopes, gyrocompasses, accelerometers, magnetometers, and/or other inertial sensors), one or more tracking cameras, and/or other position and motion sensors. These position and motion sensors may assume that head-mounted device 10 is mounted on the user's head. Therefore, herein, references to head pose, head movement, yaw of the user's head (e.g., rotation around the vertical axis), pitch of the user's head (e.g., rotation around the side-to-side axis), roll of the user's head (e.g., rotation around the front-to-back axis), etc. may be considered interchangeable with references to references to device pose, device movement, yaw of the device, pitch of the device, roll of the device, etc.

Sensors 54 may directly determine pose, movement, yaw, pitch, roll, etc. for head-mounted device 10. The yaw, roll, and pitch of the user's head may collectively define the user's head pose. These components for tracking the orientation and/or position of the user's head relative to the surrounding environment can therefore sometimes be referred to collectively as a head tracker, head pose tracker, a head (pose) tracking system, a head (pose) tracking sensor, orientation sensors, position sensors, etc. Detected changes in head pose may be used as user input to head-mounted device 10. Sensors 54 can therefore be used to determine where head-mounted device 10 is currently facing in the real-world environment (e.g., to determine where pass-through camera 50 is currently pointing). Sensors 54 can be used to determine whether device 10, when worn on a user's head, is currently moving or stationary and/or to determine the speed at which device 10 is moving.

Sensors 54 can also be used to determine a current orientation and position of device 10 within the environment. Sensors 54 is thus sometime also referred to as a position sensor. Information about the current orientation and position of device 10 along with information about the past (historical) orientation and position of device 10 can be used to determine (predict) a future orientation and position of device 10 within the environment. Sensors 54 can thus be used to determine where image sensor(s) 50 will be facing or pointing at when capturing a future frame (e.g., to predict where the user will be looking in about 10 milliseconds, 20 milliseconds, 30 milliseconds, 10-100 milliseconds, etc.). In other words, sensors 54 can be used to determine, predict, or estimate a future head pose or future device orientation.

Device 10 can also include a flicker detection sensor such as flicker sensor 56. Flicker sensor 56 can detect one or more sources of flicker and can also detect the frequency of each detected flicker source (e.g., to detect a flicker period that is equal to the inverse of the flicker frequency). Unlike an image sensor 50, which typically includes thousands or millions of image sensor pixels, flicker sensor 56 may include only a few larger photosensitive element (e.g., one or two photodiodes). Since flicker sensor 56 includes a significantly smaller number of components compared to an image sensor, flicker sensor 56 can operate at much higher frequencies. For example, flicker sensor 56 can operate at over 100 Hz, over 1000 Hz, or over 10,000 Hz and can therefore sometimes be referred to or defined as a high-sampling-rate photometer. At such high operating frequencies, flicker detection sensor 56 can be used to gather temporal information about the light source(s) in the environment. For instance, flicker sensor 56 can measure both the AC (alternating current) and DC (direct current) components of one or more light sources from the scene being captured and a corresponding confidence value for the detected flicker frequency of the light source(s) in the scene, sometimes referred to herein as a flicker frequency confidence value. A light source is sometimes referred to herein as an illuminant. In general, an environment can include one or more types of illuminants (e.g., a scene can include only one type of light source, two types of light sources, three to five types of light sources, five to ten types of light sources, or more than ten different types of light sources).

Flicker sensor 56 can have at least two channels. The first channel may include a first photodiode configured to sense visible and infrared (IR) light (e.g., light having wavelengths in the range of approximately 400-1000 nm), whereas the second channel may include a second photodiode configured to sensor only IR light (e.g., light having wavelengths in the range of approximately 700-1000 nm). An infrared filter (e.g., an IR-pass filter) may be disposed over the second photodiode, which only passes light having infrared wavelengths while filtering or blocking out visible light. An output from the first (visible + IR) channel can be referred to as a first channel response, whereas an output from the second (IR only) channel can be referred to as a second channel response.

A ratio of the second channel response to the first channel response (sometimes referred to and defined herein as a "channel ratio") can be used to determine whether device 10 is likely to be currently located in an indoor space or an outdoor space (environment). Outdoor spaces that include daylight (natural light), infrared heater, or other black body or "warm" light sources will typically have a relatively high infrared component and can thus correspond to a higher channel ratio. On the other hand, indoor spaces that might include illumination from fluorescent bulbs, light-emitting diode (LED) bulbs, or other non-black body or "cold" light sources tend to have a relatively small infrared component and can thus correspond to a smaller channel ratio. Natural daylight also tends to have a higher DC value with a lower flicker frequency confidence value compared to common indoor artificial light sources. The channel ratio and thus be used to determine a probability of a light source changing during scene capture or streaming.

The example above in which the first channel includes visible and IR light measurements and the second channel includes IR only measurements is illustrative. As another example, the first channel can include only visible light measurements while the second channel can include only IR light measurements. As another example, the first channel can include visible and IR light measurements while the second channel can include only visible light measurements. As yet another example, flicker detection sensor 56 can include multiple channels for measuring visible light and one or more channels for measuring only IR light. A weighted sum of the various channels can then be computed.

Outdoor spaces also tend to have a fewer number of light sources (e.g., sunlight or daylight is typically the predominant light source in an outdoor environment), so the possible search space for a white point region for a captured image is small. Conversely, indoor spaces tend to have a larger number of mixed light sources (e.g., light from overhead ceiling light, light from a lamp, light from a tabletop monitor, light from a cellular telephone, light from a television, daylight through a window, candlelight, etc.), and thus the possible search space for a white point region for the captured image is comparatively much larger than the outdoor scenario. All of this information can be used by color correction subsystem 60 within device 10 to efficiently produce color corrected images to be output by display(s) 14. The color corrected images presented on display(s) 14 can be referred to collectively as a color corrected video feed (stream) or passthrough feed. Color correction block 60 is sometimes referred to as being part of control circuitry within device 10.

Color correction subsystem 60 is a component within an image signal processing (ISP) pipeline configured to automatically adjust the color balance of a captured image to correct for variations in the lighting conditions in the captured image. Color correction subsystem 60 is sometimes referred to as an auto white balance (AWB) block. Color correction subsystem 60 can analyze image data gathered by image statistics collection block 52 to identify a neutral reference point such as a white point or gray point. After determining the reference point, color correction (AWB) subsystem 52 then adjusts the color balance of the entire image so that the reference point appears as a neutral color with no color cast. Color correction subsystem 60 can be implemented using a white patch algorithm, a gray world algorithm, a pattern based algorithm, or other auto white balancing algorithms. Operated in this way, color correction block 60 can output color corrected images that exhibit an accurate reproduction of colors under different lighting conditions, ensuring that the images being presented on display(s) 14 appear natural and pleasing to the human eye.

Color correction (AWB) subsystem 60 can include various subcomponents that support the AWB operation. In the example of FIG. 3, color correction subsystem 60 may include data filter components such as an input filter 62 and an output filter 64 and a mixed lighting analyzer 66. Input filter 62 can be used to filter or smooth out input data arriving at color correction block 60. For example, input filter 62 can be configured to filter previous frame statistics (e.g., to color histograms of previously captured images spatially and/or in the time domain from multiple video feeds), current frame statistics (e.g., color histograms of currently captured images), or other historical image data. Mixed lighting analyzer 66 can analyze the filtered input data output from input filter 62, can correlate past/historical color statistics to current color statistics (e.g., to compare color histograms of previously captured images to color histograms of currently captured images), can analyze the information from image statistics collection block 52, can compute a channel ratio based on the output of flicker sensor 56, can monitor the motion data output from sensors 54, and/or can monitor other information to determine a color adaptation speed for color correction block 60. The color adaptation speed may refer to or be defined herein as the pace (e.g., an AWB update frequency) and/or color change step size used by block 60 to adjust the color balance of images from frame to frame. The color adaptation speed may determine an auto white balance (AWB) gain factor. Output filter 64 can be configured to filter the AWB gain, the AWB update frequency, and/or the color adaptation speed to make the color change appear more gradual and natural to the user.

Control of the color adaptation speed can be based on a variety of factors. In one embodiment, the color adaptation (adjustment) speed can be controlled based on motion data. For example, when motion is detected, a change in light source can be assumed or is presumed to be more likely to occur, so the AWB update frequency can be increased to reduce the latency of the AWB algorithm (e.g., the color adaptation speed can be increased when motion is detected or when a correlation coefficient between the image statistics of the current frame and the prior/historical/past frame is low). When no motion is detected or when the user's head is stable and when the correlation coefficient between the statistics of the current frame and the prior (historical/past) frame is high, no change in light source is assumed, so the AWB update frequency can be reduced to save power (e.g., the color adaptation speed can be reduced when no motion is detected).

In another embodiment, the color adaptation speed can be controlled based on whether a change in light source has been detected (e.g., whether one or more new illuminants has been detected). A change in the type of light source can be detected by comparing, using mixed lighting analyze 66, color statistics from one frame to another. If the difference in color statistics from one frame to the next is less than a predetermined threshold, then the light source(s) of the captured scene has likely not changed. In such scenarios, the color adaptation speed or the AWB update frequency should be decreased to a lower value. If the difference in color statistics from one frame to the next is greater than the predetermined threshold, then the light source(s) within the captured scene has likely changed. In such scenarios, the color adaptation speed or the AWB update frequency should be increased to a greater value.

In some embodiments, the color adaptation speed can be controlled based on both motion data and detected lighting conditions. For example, if a change in light source or illuminant type is detected when the user is also moving his/her head in different directions, then color correction block 60 should update the color more quickly (i.e., to employ faster AWB adaptation). As another example, if no change in light source or illuminant type is detected even when the user is moving his/her head in different directions, then color correction block 60 should update the color less quickly (i.e., to employ slower AWB adaptation). If desired, the color adaptation speed of the AWB algorithm may only be allowed to increase if motion has also been detected by sensor(s) 54.

In another embodiment, the color adaptation speed can be controlled based on a mixed lighting score. The mixed lighting score can be computed or estimated using mixed lighting analyzer 66. The mixed lighting score can be computed based on color statistics (e.g., color histograms) obtained from image statistics collection block 52 and/or based on information gathered by flicker sensor 56. The mixed lighting score can be a function of the flicker frequency of the detected lighting in the captured scene, the confidence value of the detected flicker frequency of the lighting in the captured scene, the amount of IR component of the detected lighting in the captured scene as reflected by the channel ratio, temporal information about the AC or DC component of the detected lighting in the captured scene, information about whether device 10 is likely located indoors or outdoors as determined using flicker sensor 56, some combination of these factors, and/or other parameters. Some factors might take priority over others. For example, if the channel ratio and/or frequency of the detected illuminant(s) are relatively constant and if there is no head motion detected, the color adaptation speed might be held constant even when a change in color statistics has been detected.

A greater mixed lighting score can be indicative of a larger number of different illuminant types detected within the captured scene. A smaller mixed lighting score can be indicative of a smaller number of illuminant types detected within the captured scene. For example, a scene having only a single light source might correspond to a minimum mixed lighting score. When a large mixed lighting score is detected, color correction block 60 may employ fast color adaptation if motion is also detected (e.g., if motion sensor 54 detects that the user is looking around in different directions or is changing his/her head pose or that device 10 is moving in a certain direction). Increasing the color adaptation speed when there are many different types of light sources within a scene and/or when the detected illuminant types are changing can help emulate the human eye adaptation response. If no motion is detected, a relatively slower color adaptation can be used even if the mixed lighting score is high. When a low mixed lighting score is detected, color correction block 60 may employ slow(er) color adaption even if motion is detected. For instance, the color adaptation speed should be low whether or not motion is detected when the scene has only a single light source (illuminant).

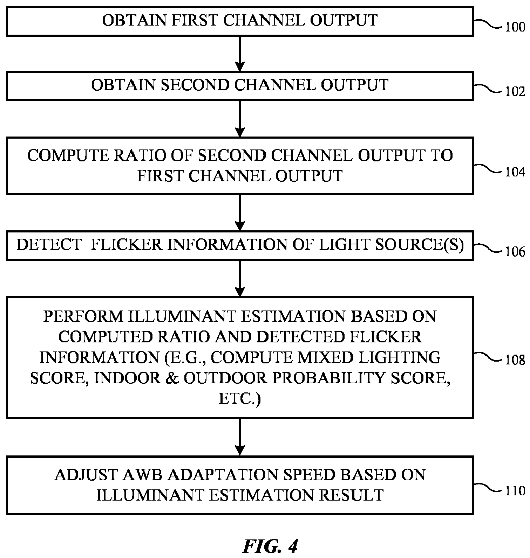

FIG. 4 is a flow chart of illustrative steps for operating color correction subsystem 60 of the type described in connection with FIG. 3. During the operations of block 100, color correction subsystem 60 may obtain a first channel output from flicker sensor 56. The first channel output may include an optical response associated with both visible light and infrared light (e.g., light having wavelengths between 400-1000 nanometers). During the operations of block 102, color correction subsystem 60 may obtain a second channel output from flicker sensor 56. The second channel output may include an optical response associated with only infrared light (e.g., light having wavelengths between 700-1000 nanometers).

During the operations of block 104, color correction subsystem 60 may compute a ratio of the second channel output to the first channel output (e.g., by dividing the second channel output by the first channel output). This computed ratio is sometimes referred to herein as a channel ratio. If desired, the channel ratio can be computed internally within flicker sensor 56. The magnitude of the channel ratio can be indicative of the type of illuminant in the captured scene. A high channel ratio corresponds to a higher amount of infrared contribution and is generally indicative of lighting conditions in an outdoor environment if the DC component value is high and flicker frequency confidence is low. A low channel ratio corresponds to a lower amount of infrared contribution and is generally indicative of lighting conditions in an indoor environment. Outdoor environments generally have fewer light sources, whereas indoor environments generally include more light sources.

During the operations of block 106, flicker sensor 56 can also be used to detect flicker information such as the frequency of the various light sources within a scene. Flicker sensor 56 can also be used to detect temporal information such as the AC and/or DC behavior of each illuminant within the scene. The detected frequency and/or temporal waveform information measured using flicker sensor 56 can be conveyed to color correction subsystem 60 for further processing. Although the operations of block 106 are shown as occurring subsequent to blocks 100, 102, and 104, the operations of block 106 can optionally be performed before or in parallel (simultaneously) with the operations of block 100, 102, and/or 104.

During the operations of block 108, color correction subsystem 60 can perform illuminant estimation based on the channel ratio computed during block 104 and/or based on the flicker information detected during block 106. The illuminant estimation operation may be performed by mixed lighting analyzer 66 in subsystem 60. For example, mixed lighting analyzer 66 may compute a mixed lighting score based on the available information and/or measurements. As examples, the illumination estimation and/or the mixed lighting score can be computed based on previous (historical) frame statistics, current frame statistics, historical and/or current color statistics (e.g., past and present color histograms), motion data, whether device 10 is likely to be indoors or outdoors (e.g., based on an indoor and outdoor probability score), the number of different illuminant types within the scene, whether a change in illuminant type or number has been detected, a combination of these factors, and/or other information. Outdoor light sources tend to result in a high outdoor probability score and a low indoor probability score, whereas indoor light sources tend to result in a high indoor probability score and a low outdoor probability score.

During the operations of block 110, color correction subsystem 60 may adjust the color (auto white balancing) adaptation speed based on the result from block 108. If the mixed lighting score is high, which is indicative of different illuminant types within the scene, then a faster AWB adaptation speed can be used. If the mixed lighting score is low, which is indicative of a small number of illuminant types within the scene, then a slower AWB adaptation speed can be used. If a change in illuminant type has been detected, then a faster AWB adaptation speed can be employed. If no change in illuminant type is detected, then a slower AWB adaptation speed can be employed. If the channel response is indicative of an outdoor environment, then a slower AWB adaptation speed can be employed since there are probably fewer light sources in the scene. If the channel response is indicative of an indoor environment, then a faster AWB adaptation speed can be used since there are probably more light sources in the scene.

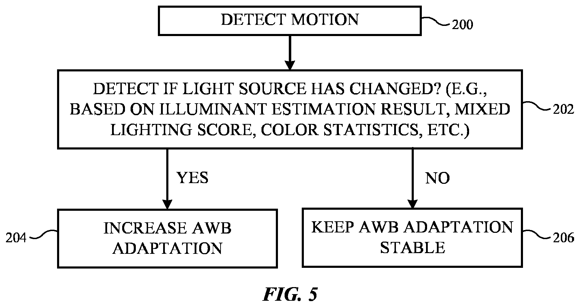

As described above in at least some embodiments, the operation of color correction block 60 might also be based on motion data. FIG. 5 is a flow chart of illustrative steps for adjusting the AWB adaptation speed based on motion data. During the operations of block 200, one or more motion sensor(s) 54 can be used to detect motion. Motion sensor(s) 54 can detect when the user is turning his/her head to look at different parts of a scene and/or when the user is walking around within an environment or moving from one environment into another (e.g., to detect when a user is transitioning from an indoor space to an outdoor space or vice versa, to detect when a user is moving from one room to another, to detect when a user is likely in a moving car, etc.). The amount of motion detected by sensor(s) 54 can be compared to a motion threshold. If the amount of detected motion is less than the motion threshold, then processing may remain at block 200 until the detected motion exceeds the threshold. When the amount of detected motion is greater than the motion threshold, then processing may proceed to block 202.

During the operations of block 202, color correction block 60 can detect whether one or more illuminant(s) have changed within a field of view of the image sensor(s) 50. This determination can be based on an illuminant estimation operation of the type described in connection with block 108 in FIG. 4, a mixed lighting score as computed by mixed lighting analyzer 66, color statistics (histogram) obtained from image statistics collection block 52, a probability of how likely device 10 is indoors or outdoors, the number of different illuminant types within the scene, whether a change in illuminant type or number has been detected, a combination of these factors, and/or other information. Although the operations of block 202 are shown as being subsequent to block 200, the operations of block 202 can occur before or in parallel (simultaneously) with block 200.

If a change in the light source has been detected, then the AWB adaptation speed can be increased to reduce latency (see operation of block 204). In some embodiments, the AWB adaptation speed can be adjusted based on the speed of the detected motion. For example, if the detected motion indicates that the user is turning his/her head at a rate that is greater than a threshold, then the AWB adaptation speed can be increased by a first amount. If, however, the detected motion indicates that the user is turning his/her head at a rate that is less than such threshold, then the AWB adaptation speed can be increased by a second amount less than the first amount or can be kept relatively stable. As another example, the AWB adaptation speed can be adjusted by an amount that is proportional to the speed of the motion detected at block 200 (e.g., the color adaptation speed can be adjusted based on or as a function of the speed of the detected motion). If no change in the light source has been detected, then the AWB adaptation speed can be kept constant or at a stable level (see operation of block 206) to save power. If the current AWB adaptation speed is high, then color correction block 60 can optionally reduce the AWB adaptation speed in block 206. In the example of FIG. 5, any adjustment in the AWB (color) adaptation speed can only occur in response to detecting motion at block 200. In other words, if no motion is detected, the AWB adaptation speed can be kept constant/stable whether its current speed is high or low.

The methods and operations described above in connection with FIGS. 1-5 may be performed by the components of device 10 using software, firmware, and/or hardware (e.g., dedicated circuitry or hardware). Software code for performing these operations may be stored on non-transitory computer readable storage media (e.g., tangible computer readable storage media) stored on one or more of the components of device 10 (e.g., the storage circuitry within control circuitry 20 of FIG. 1). The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of device 10 (e.g., one or more processors in control circuitry 20). The processing circuitry may include microprocessors, application processors, digital signal processors, central processing units (CPUs), application-specific integrated circuits with processing circuitry, or other processing circuitry.

Many different types of electronic systems can enable a person to sense and/or interact with various XR environments. Examples include head mountable systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers.

In accordance with an embodiment, a method of operating an electronic device is provided that includes acquiring a video feed using at least one image sensor, detecting a motion of the electronic device using at least one motion sensor, and performing color correction on the video feed based on the detected motion of the electronic device to generate a corresponding color corrected video feed.

In accordance with another embodiment, the method can optionally further include displaying the color corrected video feed using one or more displays in the electronic device.

In accordance with another embodiment, the method can optionally further include adjusting a color adaptation speed of the color correction on the video feed in response to detecting a first amount of motion of the electronic device.

In accordance with another embodiment, the method can optionally further include adjusting the color adaptation speed of the color correction on the video feed in response to detecting a second amount of motion of the electronic device different than the first amount of motion.

In accordance with another embodiment, the method can optionally further include keeping constant the color adaptation speed of the color correction on the video feed in response to detecting a second amount of motion of the electronic device different than the first amount of motion.

In accordance with another embodiment, the method can optionally further include determining whether a lighting condition in the video feed has changed, increasing a color adaptation speed of the color correction on the video feed in response to determining that the lighting condition in the video feed has changed, and maintaining or decreasing the color adaptation speed of the color correction on the video feed in response to determining that the lighting condition in the video feed has not changed.

In accordance with another embodiment, the method can optionally further include performing color correction on the video feed based on previous color statistics and current color statistics.

In accordance with another embodiment, the method can optionally further include filtering the previous color statistics spatially or in a time domain from a plurality of video feeds.

In accordance with another embodiment, the method can optionally further include comparing the current color statistics to the previous color statistics.

In accordance with another embodiment, the method can optionally further include performing color correction on the video feed based on data obtained from a flicker detection sensor in the electronic device.

In accordance with another embodiment, the data obtained from the flicker detection sensor can optionally include frequency information about lighting in the video feed.

In accordance with another embodiment, the data obtained from the flicker detection sensor can optionally include a first channel output that includes visible and infrared light measurements and a second channel output that includes only infrared light measurements.

In accordance with another embodiment, the method can optionally further include computing a ratio based on the first and second channel outputs and adjusting a color adaptation speed of the color correction on the video feed based on the computed ratio.

In accordance with another embodiment, the data obtained from the flicker detection sensor can optionally include a first channel output that includes only visible light measurements and a second channel output that includes only infrared light measurements.

In accordance with another embodiment, the data obtained from the flicker detection sensor can optionally include a first channel output that includes visible and infrared light measurements and a second channel output that includes only visible light measurements.

In accordance with another embodiment, the method can optionally further include computing a weighted sum of the plurality of channel outputs.

In accordance with another embodiment, the method can optionally further include computing a mixed lighting score indicative of a number or type of illuminants in the video feed, adjusting a color adaptation speed of the color correction on the video feed in response to determining that the mixed lighting score has a first value, adjusting the color adaptation speed of the color correction on the video feed in response to determining that the mixed lighting score has a second value different than the first value, and maintaining the color adaptation speed of the color correction on the video feed in response to determining that the mixed lighting score has the first value.

In accordance with an embodiment, a method of operating an electronic device is provided that includes: capturing a video feed using one or more image sensors, detecting motion using one or more motion sensors, analyzing a lighting condition of the video feed, performing color correction on the video feed based on the lighting condition in the video feed, where a color adaptation speed of the color correction on the video feed is adjusted in response to detecting motion using the one or more motion sensors.

In accordance with another embodiment, the method can optionally further include increasing the color adaptation speed in response to determining that the lighting condition has changed and maintaining or decreasing the color adaptation speed in response to determining that the lighting condition is stable.

In accordance with another embodiment, the method can optionally further include increasing the color adaptation speed in response to determining that the video feed includes a first number of illuminants and maintaining or decreasing the color adaptation speed in response to determining that the video feed includes a second number of illuminants less than the first number of illuminants.

In accordance with another embodiment, the method can optionally further include adjusting the color adaptation speed based on data from a flicker detection sensor in the electronic device.

In accordance with another embodiment, the method can optionally further include maintaining or decreasing the color adaptation speed in response to detecting a lack of motion using the one or more motion sensors.

In accordance with another embodiment, the method can optionally further include adjusting the color adaptation speed based on a speed of the detected motion.

In accordance with an embodiment, an electronic device is provided that includes one or more image sensors configured to capture a video feed, one or more motion sensors configured to detect motion, and control circuitry configured to analyze a lighting condition of the captured video feed and to perform auto white balancing (AWB) operations on the captured video feed, where an update frequency of the AWB operations is determined based on the lighting condition and the detected motion.

The foregoing is merely illustrative and various modifications can be made to the described embodiments. The foregoing embodiments may be implemented individually or in any combination.

## Claims

1. A method of operating an electronic device having at least one image sensor and at least one motion sensor, the method comprising:
acquiring a video feed using the at least one image sensor;
detecting a motion of the electronic device using the at least one motion sensor; and
performing color correction on the video feed based on the detected motion of the electronic device to generate a corresponding color corrected video feed.

2. The method of claim 1, further comprising:
displaying the color corrected video feed using one or more displays in the electronic device.

3. The method of claim 1, further comprising:
in response to detecting a first amount of motion of the electronic device, adjusting a color adaptation speed of the color correction on the video feed; and
in response to detecting a second amount of motion of the electronic device different than the first amount of motion, keeping constant the color adaptation speed of the color correction on the video feed.

4. The method of claim 1, further comprising:
determining whether a lighting condition in the video feed has changed;
in response to determining that the lighting condition in the video feed has changed, increasing a color adaptation speed of the color correction on the video feed; and
in response to determining that the lighting condition in the video feed has not changed, maintaining or decreasing the color adaptation speed of the color correction on the video feed.

5. The method of claim 4, further comprising:
performing color correction on the video feed based on previous color statistics and current color statistics.

6. The method of claim 5, further comprising:
comparing the current color statistics to the previous color statistics.

7. The method of claim 5, further comprising:
performing color correction on the video feed based on data obtained from a flicker detection sensor in the electronic device.

8. The method of claim 7, wherein the data obtained from the flicker detection sensor comprises frequency information about lighting in the video feed.

9. The method of claim 7, wherein the data obtained from the flicker detection sensor comprises:
a first channel output that includes visible and infrared light measurements; and
a second channel output that includes only infrared light measurements.

10. The method of claim 9, further comprising:
computing a ratio based on the first and second channel outputs; and
adjusting a color adaptation speed of the color correction on the video feed based on the computed ratio.

11. The method of claim 7, wherein the data obtained from the flicker detection sensor comprises:
a first channel output that includes only visible light measurements; and
a second channel output that includes only infrared light measurements.

12. The method of claim 7, wherein the data obtained from the flicker detection sensor comprises:
a first channel output that includes visible and infrared light measurements; and
a second channel output that includes only visible light measurements.

13. The method of claim 7 wherein the data obtained from the flicker detection sensor comprises a plurality of channel outputs that include visible light measurements and an additional channel output that includes only infrared light measurements, the method further comprising:
computing a weighted sum of the plurality of channel outputs.

14. The method of claim 1, further comprising:
computing a mixed lighting score indicative of a number or type of illuminants in the video feed;
in response to determining that the mixed lighting score has a first value, adjusting a color adaptation speed of the color correction on the video feed;
in response to determining that the mixed lighting score has a second value different than the first value, adjusting the color adaptation speed of the color correction on the video feed; and
in response to determining that the mixed lighting score has the first value, maintaining the color adaptation speed of the color correction on the video feed.

15. An electronic device comprising:
one or more image sensors configured to capture a video feed;
one or more motion sensors configured to detect motion; and
control circuitry configured to
analyze a lighting condition of the captured video feed, and
perform auto white balancing (AWB) operations on the captured video feed, wherein an update frequency of the AWB operations is determined based on the lighting condition and the detected motion.
